# EUROPEAN PATENT SPECIFICATION

(11) **EP 0 516 351 B1**
(45) Date of publication and mention of the grant of the patent: **15.10.1997**
(21) Application number: 92304655.1
(22) Date of filing: 22.05.1992
(51) Int. Cl.: C08L 67/02, C08K 13/02, H01B 3/42

(54) **Flame-retardant polybutylene terephthalate resin composition**
Flammhemmende Polybutylenterephthalatharzzusammensetzung
Composition de résine de polytéréphtalate de butylène ignifuge

(30) Priority: 29.05.1991 JP 125803/91
(43) Date of publication of application: 02.12.1992
(73) Proprietor: POLYPLASTICS CO. LTD., Chuo-Ku Osaka-shi Osaka 541 (JP)
(72) Inventor: Hanabusa, Kazuto, Fuji-shi, Shizuoka (JP)
(74) Representative: Tebbit, Antony Hugh Edward

(56) References cited:
- EP-A- 0 226 189
- EP-A- 0 421 307
- EP-A- 2 375 312
- US-A- 4 530 953
- DATABASE WPIL Week 9118, Derwent Publications Ltd., London, GB; AN 91-130213

## Description

### [FIELD OF THE INVENTION]

The present invention related to a flame-retardant polybutylene terephthalate resin composition. More particularly, it provides a resin composition which has such performances as to keep the excellent contact characteristics of an electrical component such as relay or switch for a prolonged period, and is excellent in processability in moulding.

### [DESCRIPTION OF THE RELATED ART]

Polybutylene terephthalate (hereinafter abbreviated to "PBT") is excellent in mechanical and electrical properties and physical and chemical characteristics as a crystalline thermoplastic resin, so that it is used as an engineering plastic in a wide field including automobile, electrical and electronic appliances and so forth.

When good flame retardance properties are required, as they are in electrical and electronic components, a flame-retardant PBT resin composition has hitherto been prepared by blending the PBT resin with an organic halogenous flame retardant such as decabromo-diphenyl ether or brominated polycarbonate oligomer, alone or together with an auxiliary flame retardant such as antimony trioxide.

However, such a flame-retardant PBT resin composition has a problem that when it is used as a material of a contact-making electrical component, it generates a large amount of a gas in long-term or high-temperature service to lower the contact characteristics of the component.

The reason why such a problem occurs is presumed to be that when the composition is heated in moulding or when a moulded article made from the composition is used at high temperature, PBT, flame retardant and/or decomposition products thereof are carbonised with slight arc at a contact to adhere to the contact or corrode it.

In order to solve the problem, the use of brominated bisimide, brominated epoxy oligomer and so forth as the flame retardant has been proposed. However, these brominated flame retardants are still not wholly satisfactory since a PBT composition containing such a flame retardant still generates a gas, albeit in a somewhat reduced amount. Further, the use of a brominated epoxy oligomer causes another problem in that the resulting composition thickens during residence in moulding to result in poor fluidity.

Other proposals include a process for inhibiting the thermal decomposition of a PBT resin by adding a phenol, amine or phosphorus compound or the like. However, a PBT resin composition containing such a compound is hardly improved in contact characteristics, though it generates a reduced amount of a gas in service.

Thus, the preparation of a flame-retardant PBT resin composition satisfactory in both gas generation and contact characteristics was very difficult, and this has hindered the enlargement of the application field of a PBT resin not a little, and accordingly, the improvement of PBT in these respects has been earnestly sought.

### [SUMMARY OF THE INVENTION]

The inventor of the present invention have intensively studied to obtain a flame-retardant PBT resin composition suitable for a material of a contact-bearing electrical component which generates an organic gas and a halogenous corrosive gas each in a reduced amount and therefore hardly corrodes the metal constituting the contact even after prolonged use.

According to the present invention, there is provided a flame-retardant polybutylene terephthalate resin composition which comprises
(A) 100 parts by weight of a polybutylene terephthalate resin having an intrinsic viscosity of 0.75 to 1.5 dL/g,
(B) 1 to 50 parts by weight of a halogenated phenoxy compound composed of repeating units represented by the general formula (1) and having a number-average degree of polymerisation of 6 to 30: 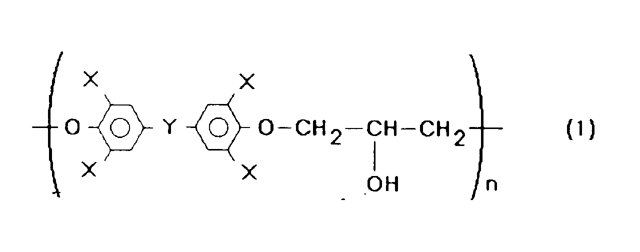 wherein X represents a bromine or chlorine atom; and Y represents alkylene having I to 10 carbon atoms, alkylidene, cycloalkane, carbonyl, -O-, -S- or -SO₂-,
(C) 0.1 to 30 parts by weight of an antimony compound containing antimony pentoxide and an alkali metal oxide as constituents,
(D) 0.01 to 10 parts by weight of a fatty acid ester of a polyhydric alcohol, and, optionally,
(E) 0 to 150 parts by weight of a filler.

### [Detailed Description of the Invention]

Each component constituting the composition of the present invention will now be described in detail,

First, the polybutylene terephthalate resin (A) to be used in the present invention is preferably one prepared by polycondensing 1,4-butanediol with terephthalic acid or a lower alcohol ester thereof. The polybutylene terephthalate resin may be also a copolymer containing polybutylene terephthalate in an amount of 70% by weight or above. Monomerwhich may be copolymerised with PBT include dibasic acids other than terephthalic acid or lower alcohol esters thereof, for example, aliphatic and aromatic polybasic acids such as isophthalic acid, naphthalenedicarboxylic acid, adipic acid, sebacic acid, trimellitic acid and succinic acid and ester-forming derivatives thereof; aromatic hydroxycarboxylic acids such as hydroxybenzoic acid and hydroxynaphthoic acid and ester-forming derivatives thereof; glycols other than 1,4-butanediol, for example, conventional alkylene glycols such as ethylene glycol, diethylene glycol, propylene glycol, trimethylene glycol, hexamethylene glycol, neopentyl glycol and cyclohexanedimethanol; lower alkylene glycols such as 1,8-octanediol; aromatic alcohols such as bisphenol A and 4,4'-dihydroxybiphenyl; adducts of bisphenol A with alkylene oxides such as adduct thereof with two ethylene oxide molecules and adduct thereof with two propylene oxide molecules; and polyhydroxyl compounds such as glycerin and pentaerythritol and ester-forming derivatives thereof.

In the present invention, any of the polybutylene terephthalates prepared by the polycondensation of monomers selected from among those described above can be used as the component (A) either alone or as a mixture of two or more of them. The use of polybutylene terephthalate or a mixture comprising it as a main component is preferable. Further, PBT branched polymers falling into the category of the copolymer may be used. The term "PBT branched polymer" as used herein denotes a polybutylene terephthalate, or polyester mainly composed of butylene terephthalate units, which has a branch formed by the addition of a polyfunctional compound. Polyfunctional compounds which may be used in the preparation of the branched polymer include trimesic acid, trimellitic acid and pyromellitic acid, and alcohol esters thereof; glycerin, trimethylolethane, trimethylolpropane, pentaerythritol and so forth.

It is essential that the PBT resin to be used in the present invention have an intrinsic viscosity of 0.75 to 1.5 dL/g, preferably 0.8 to 1.2 dL/g, more preferably 0.8 to 1.0 dL/g as determined in o-chlorophenol at 30°C. When the intrinsic viscosity is lower than 0.75 dL/g, the evolution of a gas such as tetrahydrofuran from the PBT resin will not be sufficiently depressed, while when it exceeds 1.5 dL/g, the resulting resin will be poor in fluidity in moulding.

The halogenated phenoxy compound (B) to be added to the PBT resin (A) in the present invention is a compound represented by the general formula (1), which can be prepared by, for example, reacting a halogenated bisphenol glycidyl ether with a halogenated bisphenol in the presence of a suitable catalyst, if necessary, in a solvent.

Halogenated biphenol compounds constituting the halogenated phenoxy compound represented by the general formula (1) include:
2,2-bis(3,5-dibromo-4-hydroxyphenyl)propane,
bis(3,5-dibromo-4-hydroxyphenyl)methane,
bis(3,5-dibromo-4-hydroxyphenyl)phenylmethane,
1,1-bis(3,5-dibromo-4-hydroxyphenyl)ethane,
bis(3,5-dibromo-4-hydroxyphenyl)sulfone,
bis(3,5-dibromo-4-hydroxyphenyl)ether,
bis(3,5-dibromo-4-hydroxyphenyl)ketone,
bis (3, 5-dibromo-4-hydroxyphenyl)sulphide,
2,2-bis(3,5-dichloro-4-hydroxyphenyl)propane,
bis(3,5-dichloro-4-hydroxy-phenyl)methane,
bis(3.5-dichloro-4-hydroxyphenyl)sulfone,
bis(3,5-dichloro-4-hydroxyphenyl)sulphide and so forth.

Among these compounds, 2,2-bis(3,5-dibromo-4-hydroxyphenyl)propane often called tetrabromobisphenol A is most desirable. An unhalogenated bisphenol compound such as 2,2-bis(4-hydroxyphenyl) propane, bis(4-hydroxyphenyl)sulfone or bis(4-hydroxyphenyl)methane may be used together with the halogenated one described above.

The halogenated phenoxy compound to be used in the present invention generally has a glycidyl group and/or a hydroxyl group at its ends, but the terminal groups may be blocked with a carboxylic acid, phenol, amine, alcohol or the like.

Halogenated phenoxy compounds (B) which may be used in the present invention have a number-average degree of polymerisation of 6 to 30. When the degree of polymerisation is lower than 6, the resulting composition will be poor in residence stability in moulding to generate a large amount of a gas and when the composition is prepared on an extruder, much deposit will be formed in the inside of the extruder to necessitate frequent cleaning. On the contrary, when the degree of polymerisation exceeds 30, the preparation of the composition by extrusion will be difficult owing to its too high melt viscosity. Satisfactory residence stability and melt viscosity are promoted by selecting a halogenated phenoxy compound having a number-average degree of polymerisation within a preferred range of 10 to 25, more preferably 10 to 20.

The amount of the halogenated phenoxy compound to be added according to the present invention is 1 to 50 parts by weight per 100 parts by weight of the polybutylene terephthalate resin. When the amount thereof is less than 1 part by weight, an insufficient flame-retardant effect will be attained, while when it exceeds 50 parts by weight, the resulting flame-retardant composition will be poor in mechanical and thermal properties unfavourably. A favourable compromise between these requirements is achieved by adding the halogenated phenoxy compound in an amount of 5 to 30 parts by weight,

Antimony compounds (C) which may be used in the present invention are those containing antimony pentoxide (Sb₂O₅) and an alkali metal oxide (M₂0) as constituents. Such compound is preferably one containing antimony pentoxide and an alkali metal oxide at a molar ratio of between 1 : 0.1 and 1 : 0.8. The metal constituting the alkali metal oxide includes lithium, sodium, potassium, rubidium, caesium and so forth, among which sodium and potassium are preferable in respect of cost. Particularly, sodium is most preferred.

The antimony compound can be prepared by, e.g., a process which comprises
(a) dispersing sodium antimonate in water, adding 0.5 to 20% by weight (based on sodium antimonate) of an organic base or a salt thereof and adding 1.5 to 5 times by equivalent as much mono- or di-basic base as sodium antimonate to the resulting mixture to conduct a reaction, thus forming an antimony pentoxide gel,
(b) recovering this gel by filtration, washing it with water, dispersing it in water again and ageing the obtained dispersion at 50°C to 100°C, and
(c) adding an alkali metal hydroxide and/or an alkali metal salt to the resulting dispersion, filtering the obtained mixture, and drying and pulverising the obtained solid.

The above drying may be conducted at a temperature of from room temperature to 500°C. The product prepared by drying at 270°C or below contains 4 to 16% of water as water of crystallisation. The antimony compound is suitably prepared as a powder having a mean particle diameter of 0.5 to 50 µm.

Further, it is preferable that the antimony compound to be used in the present invention be one forming a slurry having a pH of 6 to 10, more preferably 7 to 9, when dispersed in water. When the pH of the slurry is below 6 or exceeds 10, decomposition of the PBT resin will be accelerated, so that an increased amount of a gas will be generated from the resin.

The amount of the antimony compound (C) to be added according to the present invention is 0.1 to 30 parts by weight, preferably 0.5 to 20 parts by weight, per 100 parts by weight of the polybutylene terephthalate resin.

When the amount is less than 0.1 part by weight, the flame retardance of a PBT resin will not be sufficiently improved, while when it exceeds 30 parts by weight, the mechanical properties of the resin will be impaired. Using 0.5 to 20 parts by weight further promotes good flame-retardance and good mechanical properties.

As described above, the composition of the present invention is characterised by further containing at least one fatty acid ester (D) of a polyhydric alcohol which will be described below in a specific amount in addition to the above-mentioned polybutylene terephthalate (A), halogenated phenoxy compound (B) and antimony compound (C).

By blending such four components together, a composition can be provided which exhibits excellent flame retardance and well-balanced mechanical characteristics, generates a gas in greatly reduced amounts in processing in moulding and in service and is improved in dispersibility, mould release properties and fluidity, in which properties PBT resin compositions containing the components (B) and (C) may otherwise be deficient. Such a composition can also be provided which exhibits good contact characteristics.

The fatty acid ester (D) of a polyhydric alcohol to be added for such purposes is an ester of a polyhydric alcohol, such as glycerin, pentaerythritol or sorbitan, with a fatty acid, such as lauric acid, palmitic acid and stearic acid, or a hydroxy fatty acid.

The polyhydric alcohol going to form the ester is preferably at least one member selected from among ethylene glycol, polyethylene glycol, propylene glycol, glycerin and pentaerythritol. The fatty acid going to form the fatty acid ester is preferably one having at least 12 carbon atoms such as lauric acid, oleic acid, palmitic acid, stearic acid, behenic acid, montanic acid, hydroxystearic acid and hydroxybehenic acid. Particularly, a fatty acid having 16 to 35 carbon atoms such as stearic acid or behenic acid is preferred.

When an ester prepared from a fatty acid having less than 12 carbon atoms is used, the resulting composition will tend to be little improved in mould release properties and will also tend to be poor in heat resistance.

Examples of fatty acid ester which may be used in the present invention include ethylene glycol monopalmitate, ethylene glycol dipalmitate, ethylene glycol monostearate, ethylene glycol distearate, ethylene glycol monobehenate, ethylene glycol dibehenate, ethylene glycol montanate, ethylene glycol dimontanate, glycerin monopalmitate, glycerin dipalmitate, glycerin tripalmitate, glycerin monostearate, glycerin distearate, glycerin tristearate, glycerin monohydroxystearate, glycerin monobehenate, glycerin dibehenate, glycerin tribehenate, glycerin monohydroxybehenate, pentaerythritol monopalmitate, pentaerythritol dipalmitate, pentaerythritol tripalmitate, pentaerythritol tetrapalmitate, pentaerythritol monostearate, pentaerythritol distearate, pentaerythritol tristearate, pentaerythritol monohydroxystearate, pentaerythritol monobehenate, tetrabehenate, pentaerythritol dibehenate, pentaerythritol tribehenate, pentaerythritol pentaerythritol monohydroxybehenate, pentaerythritol monomontanate, pentaerythritol dimontanate, pentaerythritol trimontanate and pentaerythritol tetramontanate.

These fatty acid esters may be used either alone or as a mixture of two or more of them.

The fatty acid ester to be used in the present invention can be prepared by a process known *per se*. It is preferable that the fatty acid ester have at least one hydroxyl group in its molecule. By controlling the ratio of hydroxyl group to ester group, the composition can be improved with a good balance between moulding properties (such as fluidity and mould release properties) and gas evolution.

The fatty acid ester is preferably a fatty acid ester of glycerin or pentaerythritol, more preferably mono- or di-ester of glycerin or pentaerythritol with stearic or behenic acid, though the object of the present invention can be attained by using any of triesters described above.

The amount of the fatty acid ester (D) to be added is 0.01 to 10 parts by weight, preferably 0.1 to 5 parts by weight, more preferably 0.5 to 3 parts by weight. When the amount is less than 0.01 part by weight, the mouldability will hardly be improved and the gas evolution will scarcely be depressed, while when it exceeds 10 parts by weight, the mechanical properties will be adversely affected unfavourably.

According to the present invention, the use of an optional filler as component (E) is effective in producing a moulded article excellent in mechanical strength, heat resistance, dimensional stability (resistances to deformation and warpage) and electrical properties. Such filler may be selected from among fibrous, powdery and flaky ones depending upon the object.

Fibrous fillers which may be used include fibrous materials, for example, fibres of glass, carbon, silica, silica/alumina, zirconia, boron nitride, silicon nitride, boron and potassium titanate, and fibres of metals such as stainless steel, aluminium, titanium, copper and brass. Among them, glass fibre and carbon fibre are most representative. Further, high-melting organic fibrous materials, for example, polyamide and acrylic resin, may also be used, whether as an alternative or in addition.

Powdery fillers which may be used include carbon black, silica, quartz powder, glass beads, glass powder, silicates such as calcium silicate, aluminium silicate, kaolin, talc, clay, diatomaceous earth and wollastonite, metal oxides such as iron oxide, titanium oxide, zinc oxide and alumina; metal carbonates such as calcium carbonate and magnesium carbonate; metal sulphates such as calcium sulphate and barium sulphate; silicon carbide, silicon nitride, boron nitride, and so forth.

Flaky fillers which may be used include mica, glass flake and various metal foils.

These fillers may be used alone or as a mixture of two or more of them. The simultaneous use of a fibrous filler, particularly glass fibre with a powdery or flaky filler is particularly effective in producing an article which is excellent not only in mechanical strengths but also in dimensional accuracy and electrical properties.

If required, these fillers may be used together with a sizing agent or a surface treatment. Examples thereof include functional compounds such as epoxy compound, isocyanate compound, silane compound and titanate compound. These compounds may be pre-applied to the filler or added while preparing the composition.

According to the present invention, the amount of the filler to be added is 0 to 150 parts by weight, preferably 5 to 100 parts by weight, per 100 parts by weight of the polybutylene terephthalate resin. When the amount exceeds 150 parts by weight, the processing of the resulting composition in moulding may be difficult and the obtained moulded article will be problematic in mechanical strength.

The amount of the polyfunctional surface treatment to be used is preferably 0 to 10% by weight, more preferably 0.05 to 5% by weight based on the filler. The composition of the present invention may also contain a small amount of other thermoplastic resin, so far as the object of the present invention is not hindered. Examples of the thermoplastic resin include ethylene-acrylate copolymer, polyamide, polyacetal, polystyrene, styrene-butadiene copolymer, styrene-butadiene-acrylonitrile copolymer, styrene-butadiene-acrylic acid (or its ester) copolymer, styrene-acrylonitrile copolymer, polycarbonate, polyurethane, polyphenylene oxide, polyphenylene sulphide, polybutadiene, halogenated polyolefin, polyvinyl halide, butyl rubber and multi-phase graft polymer comprising polyacrylate as a main component, which may be used at an arbitrary ratio depending upon the properties required.

Of course, the composition of the present invention may further contain known substances which are generally added to thermoplastic resins in order to impart desired characteristics to the composition depending upon the object, and examples of such substances include slip additives other than those described above, mould release agents, lubricants, colorants such as dyes and pigments, plasticisers, nucleating agents, crystallisation accelerators, stabilisers such as antioxidants, heat stabilisers and ultraviolet absorbers, and antistatic agents.

The composition of the present invention can be easily prepared by any conventional process for the preparation of a resin composition using conventional equipment. For example, the composition can be prepared by, e.g., (i) a process which comprises mixing the components together, melt-kneading and pelletising the obtained mixture on an extruder and moulding the obtained pellets, (ii) a process which comprises preparing a plurality of pelletised compositions different from each other in formulation, mixing the pelletised compositions at a predetermined ratio and moulding the obtained mixture to form a moulded article having a desired composition or (iii) a process characterised by directly feeding one or more components into a moulding machine. Further, the employment of a process of pulverising part of the resin component, mixing the obtained powder with the other components and adding the obtained mixture to the rest is advantageous in order to obtain a homogeneous blend.

As will be understood from the foregoing description, the flame-retardant polybutylene terephthalate resin composition of the present invention prepared by blending a polybutylene terephthalate having a specified intrinsic viscosity with a halogenated phenoxy compound having a specified degree of polymerisation, a specified antimony compound and a specified fatty acid ester is excellent in mouldability and can form a moulded article which exhibits excellent flame retardance and generates a gas in greatly reduced amounts in practical service, so that the surface of a contact is hardly stained with deposit even after prolonged use. Accordingly, the composition can be favourably used in the production of electrical and electronic parts and automobile parts.

### [EXAMPLES]

The present invention will now be described specifically by reference to the following Examples, though the present invention is not limited by them, but includes various embodiments so far as they do not depart from the scope of the present invention as defined in the claims hereof. Each composition was evaluated for various characteristics by the following methods:

### (1) ) GAS EVOLUTION

Pellets having a composition specified in Table 1 were injection-moulded into an ASTM tensile test piece and this test piece was pulverised. The pulverised piece was used as a sample. 5 g of the sample was allowed to stand in a 20 mL head space at 150°C for one hour to determine the amount of a gas generating from the sample by gas chromatography. The amount (weight) of the gas was shown by ppm based on the weight of the sample. The conditions of the determination are as follows:

| | |
|---|---|
| equipment | HP5890A |
| column | HR-1701, 0.32 mm⌀ × 30 cm |
| column temperature | 50°C (1 min) → 5°C/min → 250°C (1 min) |
| detector | FID |

### (2) FLUIDITY

### METHOD FOR DETERMINING FLUIDITY (BAR FLOW LENGTH)

Pellets having a composition specified in Table I were moulded into a thin test piece [5 mm (width) ×0.5 mm (thickness)] on a moulding machine under the following conditions to determine the flow length (the length of the mould filled with the resin) and the fluidity of the composition was evaluated based thereon:

| | |
|---|---|
| cylinder temperature | 260°C |
| injection pressure | 750 kg/cm² |
| mould temperature | 60°C |

### (3) CORROSIVENESS AGAINST METAL (DEPOSIT THEREON)

20 g of pellets having a composition specified in the Table 1 and a silver plate were put in a 100 mL glass bottle, followed by stopping. The resulting bottle was allowed to stand at 150°C for 500 hours to observe the surface of the silver plate with the naked eye. The corrosiveness was evaluated according to the following ranks:

### CORROSION (DEPOSIT):

- •: no deposit,
- ○: slight deposit,
- Δ: thin deposit over the whole surface,
- ×: thick deposit over the whole surface.

### (4) FLAME RETARDANCE TEST (UL-94)

Five test pieces (thickness: 1/32 inch [0.8 mm]) were examined for flame retardance according to Underwriter's Laboratories, Subject 94 (UL-94).

### EXAMPLES 1 TO 7 AND COMPARATIVE EXAMPLES 1 TO 10

Compositions having formulations specified in Table 2 with respect to the Examples and Table 3 with respect to the Comparative Examples were prepared by the use of the components listed in the Table 1 and evaluated for their properties and characteristics. The results are given in Tables 2 and 3.

Each composition was prepared as follows: polybutylene terephthalate (A) was blended with the components (B), (C) and (D) each in a specified amount; the obtained blend was homogeneously mixed in a V blender; the obtained mixture was melt-extruded on a twin-screw extruder having a diameter of 30 mm at a barrel temperature of 260°C while feeding a specified amount of glass fibres through a side feed opening; and the strands extruded through a die were cooled and cut into pellets.

**Table 1**

| | No. | Properties |
|---|---|---|
| Polybutylene terephthalate | A-1 | polybutylene terephthalate having an Intrinsic viscosity of 0.8 |
| | A-2 | polybutylene terephthalate having an intrinsic viscosity of 0.9 |
| | A-3 | polybutylene terephthalate having an Intrinsic viscosity of 1.0 |
| | A'-1 | polybutylene terephthalate having an intrinsic viscosity of 0.7 |
| Flame retardant | B-1 | halogenated phenoxy compound having a structure of the following general formula (2) and an average degree of polymerisation of 12 |
| | B-2 | halogenated phenoxy compound having a structure of the following general formula (2) and an average degree of polymerisation of 18 |
| | B'-1 | brominated polycarbonate oligomer having an average molecular weight of 2000 |
| Auxiliary flame retardant | C-1 | antimony compound comprising Sb₂O₅ and Na₂O (Sb₂O₅ : Na2O : H₂O = I : 0.7 : 0.5 (by mol)) |
| | C-2 | antimony compound comprising Sb₂O₅ and Na₂O (Sb₂O₅ : Na₂O : H₂O = I : 0.5 : 4.0 (by mol)) |
| | C'-1 | Sb₂O₅ |
| Fatty acid ester | D-1 | glycerin monobehenate |
| | D-2 | pentaerythritol monostearate |
| | D-3 | propylene glycol monostearate |
| | D'-1 | stearyl stearate |

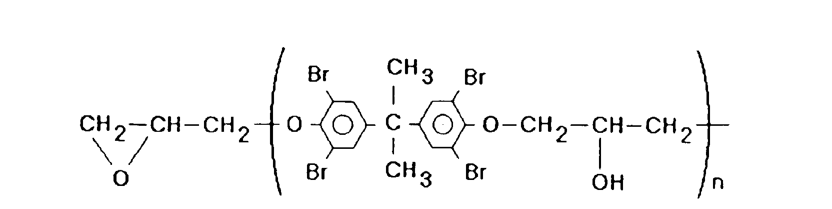

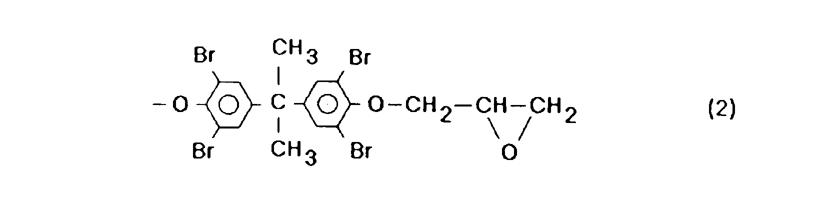

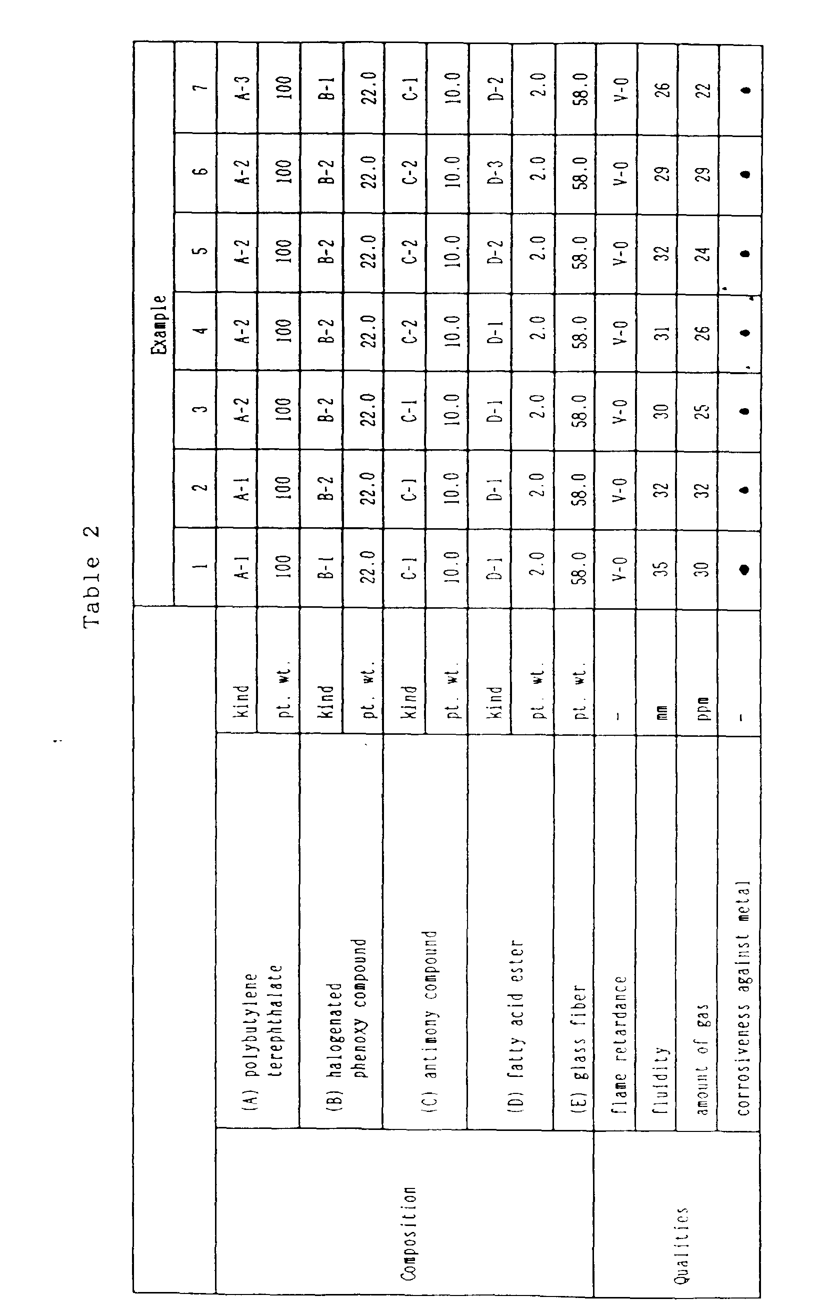

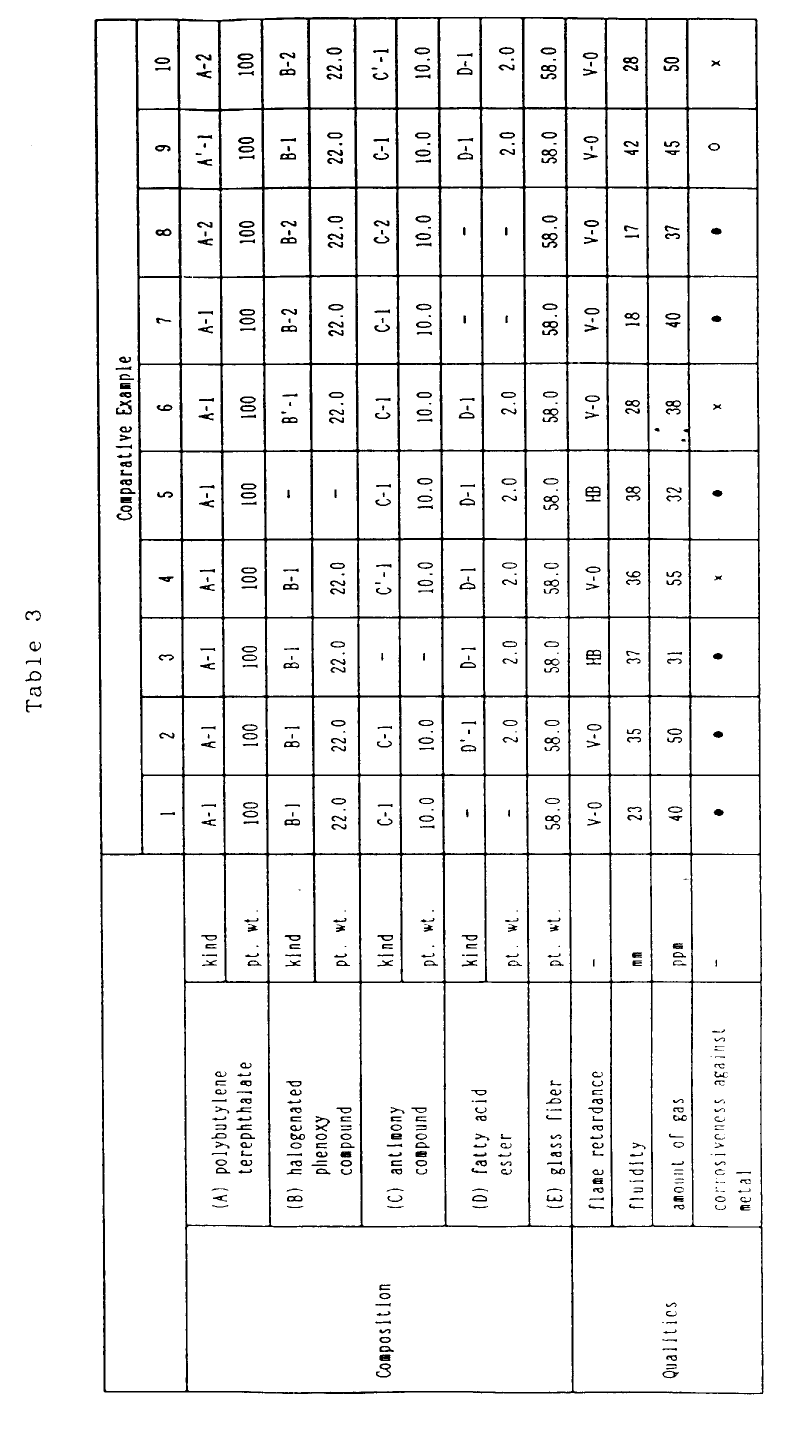

## Claims

1. A flame-retardant polybutylene terephthalate resin which comprises
(A) 100 parts by weight of a polybutylene terephthalate resin having an intrinsic viscosity of 0.75 to 1.5 dL/g,
(B) 1 to 50 parts by weight of a halogenated phenoxy compound composed of repeating units represented by the general formula (1) and having a number-average degree of polymerisation of 6 to 30: 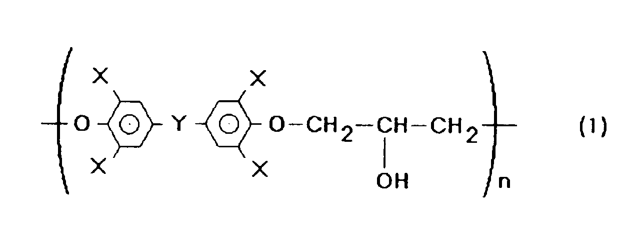 wherein X represents a bromine or chlorine atom; and Y represents alkylene having 1 to 10 carbon atoms, alkylidene, cycloalkane, carbonyl, -O-, -S- or -SO2-,
(C) 0.1 to 30 parts by weight of an antimony compound containing antimony pentoxide and an alkali metal oxide as constituents,
(D) 0.01 to 10 parts by weight of a fatty acid ester of a polyhydric alcohol, and, optionally,
(E) 0 to 150 parts by weight of a filler.

2. A flame-retardant polybutylene terephthalate resin composition as set forth in claim 1, wherein said antimony compound (C) is one comprising antimony pentoxide and an alkali metal oxide at a molar ratio of between 1 : 0.1 and 1 : 0.8.

3. A flame-retardant polybutylene terephthalate resin composition as set forth in claim 1 or 2, wherein the fatty acid ester (D) is a fatty acid ester of ethylene glycol or propylene glycol.

4. A flame-retardant polybutylene terephthalate resin composition as set forth in claim I or 2, wherein the fatty acid ester (D) is a fatty acid ester of glycerol or pentaerythritol.

5. A flame-retardant polybutylene terephthalate resin composition as set forth in claim 4, wherein said fatty acid ester (D) of a polyhydric alcohol is one having a hydroxyl group.

6. A flame-retardant polybutylene terephthalate resin composition as set forth in any of claims 1 to 5, wherein the fatty acid ester (D) is an ester of a fatty acid or hydroxy fatty acid having 15 to 35 carbon atoms.

7. A flame-retardant polybutylene terephthalate resin composition as set forth in claim 6, wherein the fatty acid is stearic acid or behenic acid.

8. A moulded article for an electrical or electronic part produced by the moulding of the composition as set forth in any of claims 1 to 7.

## Patentansprüche

1. Flammenhemmendes Polybutylenterephthalatharz, umfassend
(A) 100 Gew.-Teile eines Polybutylenterepthalat-Harzes mit einer Grenzviskosität von 0,75 bis 1,5 dl/g,
(B) 1 bis 50 Gew.-Teile einer halogenierten Phenoxyverbindung, bestehend aus Repetiereinheiten, die durch die allgemeine Formel (1) dargestellt werden und ein Zahlenmittel des Polymerisationsgrades von 6 bis 30 aufweisen: 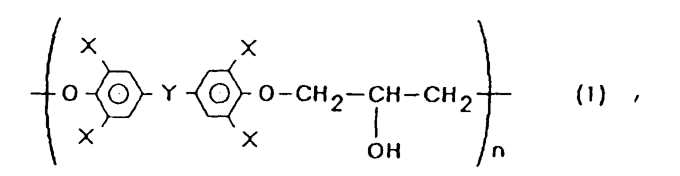 wobei X ein Brom- oder Chloratom darstellt und Y ein Alkylen mit 1 bis 10 Kohlenstoffatomen, Alkyliden, Cycloalkan, Carbonyl, -O-, -S- oder -SO₂- darstellt,
(C) 0,1 bis 30 Gew.-Teile einer Antimonverbindung, die Antimonpentoxid und ein Alkalimetalloxid als Bestandteile enthält,
(D) 0,01 bis 10 Gew.-Teile eines Fettsäureesters eines Polyalkohols und gegebenenfalls
(E) 0 bis 150 Gew.-Teile eines Füllstoffs.

2. Flammenhemmende Polybutylenterephthalatharz-Zusammensetzung nach Anspruch 1, wobei die Antimonverbindung (C) Antimonpentoxid und ein Alkalimetalloxid mit einem Stoffmengenverhältnis von 1 : 0,1 und 1 : 0,8 umfaßt.

3. Flammenhemmende Polybutylenterephthalatharz-Zusammensetzung nach Anspruch 1 oder 2, wobei der Fettsäureester (D) ein Fettsäureester von Ethylenglycol oder Propylenglycol ist.

4. Flammenhemmende Polybutylenterephthalatharz-Zusammensetzung nach Anspruch 1 oder 2, wobei der Fettsäureester (D) ein Fettsäureester von Glycerin oder Pentaerythrit ist.

5. Flammenhemmende Polybutylenterephthalatharz-Zusammensetzung nach Anspruch 4, wobei der Fettsäureester (D) eines Polyalkohols eine Hydroxylgruppe aufweist.

6. Flammenhemmende Polybutylenterephthalatharz-Zusammensetzung nach einem der Ansprüche 1 bis 5, wobei der Fettsäureester (D) ein Ester einer Fettsäure oder einer Hydroxyfettsäure mit 15 bis 35 Kohlenstoffatomen ist.

7. Flammenhemmende Polybutylenterephthalatharz-Zusammensetzung nach Anspruch 6, wobei die Fettsäure Stearinsäure oder Behensäure ist.

8. Formgepreßter Gegenstand für ein elektrisches oder elektronisches Teil, hergestellt durch das Formpressen der Zusammensetzung nach einem der Ansprüche 1 bis 7.

## Revendications

1. Une résine ignifuge poly(téréphtalate de butylène) qui comprend
(A) 100 parties en poids d'une résine poly(téréphtalate de butylène) ayant une viscosité intrinsèque de 0,75 à 1,5 dl/g.
(B) 1 à 50 parties en poids d'un composé phénoxylé halogéné composé de motifs répétés représentés par la formule générale (1) et ayant un degré de polymérisation moyen en nombre de 6 à 30 : 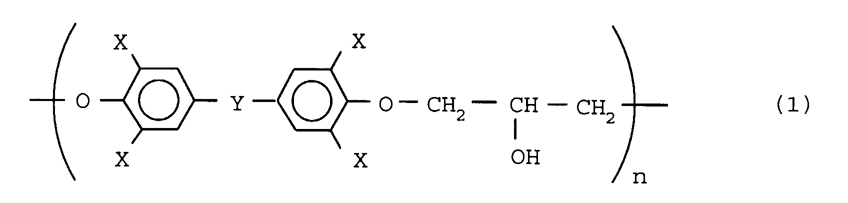 dans laquelle X représente un atome de brome ou un atome de chlore ; et Y représente un radical alkylène ayant 1 à 10 atomes de carbone, un radical alkylidène, un radical cycloalcane, un groupe carbonyle, -O-, -S- ou -SO₂,
(C) 0,1 à 30 parties en poids d'un composé d'antimoine contenant comme constituants du pentoxyde d'antimoine et un oxyde de métal alcalin,
(D) 0,01 à 10 parties en poids d'un ester d'acide gras d'un polyol, et, facultativement,
(E) 0 à 150 parties en poids d'une charge.

2. Une composition de résine ignifuge poly(téréphtalate de butylène) telle que définie dans la revendication 1, dans laquelle ledit composé d'antimoine (C) est un composé qui est constitué de pentoxyde d'antimoine et d'un oxyde de métal alcalin en des proportions molaires comprises entre 1:0,1 et 1:0,8.

3. Une composition de résine ignifuge poly(téréphtalate de butylène) telle que définie dans la revendication 1 ou 2, dans laquelle l'ester d'acide gras (D) est un ester d'acide gras de l'éthylèneglycol ou du propylèneglycol.

4. Une composition de résine ignifuge poly(téréphtalate de butylène) telle que définie dans la revendication 1 ou 2, dans laquelle l'ester d'acide gras (D) est un ester d'acide gras du glycérol ou du pentaérythritol.

5. Une composition de résine ignifuge poly(téréphtalate de butylène) telle que définie dans la revendication 4, dans laquelle ledit ester d'acide gras (D) d'un polyol est un ester portant un groupe hydroxyle.

6. Une composition de résine ignifuge poly(téréphtalate de butylène) telle que définie dans l'une quelconque des revendications 1 à 5, dans laquelle l'ester d'acide gras (D) est un ester d'un acide gras ou d'un acide gras hydroxylé ayant 15 à 35 atomes de carbone.

7. Une composition de résine ignifuge poly(téréphtalate de butylène) telle que définie dans la revendication 6, dans laquelle l'acide gras est l'acide stéarique ou l'acide béhénique.

8. Un article moulé pour une pièce électrique ou électronique produit par le moulage de la composition telle que définie dans l'une quelconque des revendications 1 à 7.
